(19) Europäisches Patentamt
European Patent Office
Office européen des brevets

(11) EP 2 402 832 B1

(12) EUROPÄISCHE PATENTSCHRIFT

(45) Veröffentlichungstag und Bekanntmachung des Hinweises auf die Patenterteilung:
20.04.2016 Patentblatt 2016/16

(51) Int Cl.:
G05B 23/02 (2006.01)    G09G 5/02 (2006.01)

(21) Anmeldenummer: 10014594.5

(22) Anmeldetag: 13.11.2010

(54) **Verfahren und Anzeigesystem zur Kalibrierung von normierten Anzeigen von Prozessgrössen**

Method and display system for calibrating standardised displays of process values

Procédé et système d'affichage pour le calibrage d'affichages normalisés de grandeurs de processus

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 01.06.2010 EP 10005670

(43) Veröffentlichungstag der Anmeldung:
04.01.2012 Patentblatt 2012/01

(73) Patentinhaber: ABB Technology AG
8050 Zürich (CH)

(72) Erfinder:
• Chioua, Moncef, Dr.
69115 Heidelberg (DE)

• Hollender, Martin, Dr.
69221 Dossenheim (DE)

(74) Vertreter: Kock, Ina et al
ABB AG
GF-IP
Wallstadter Straße 59
68526 Ladenburg (DE)

(56) Entgegenhaltungen:
EP-A1- 1 355 210        DE-A1-102007 009 341
US-A1- 2009 179 881

**Beschreibung**

Die Erfindung betrifft ein Verfahren und ein Anzeigesystem zur Kalibrierung von normierten Anzeigen, auch Darstellungen oder Ansichten genannt, einer Vielzahl von Prozess- und/oder Anlagedaten, welche während des Betriebes technischer Anlagen oder dem Ablauf technischer Prozesse auftreten. Die Erfindung ist, insbesondere zur grafischen Darstellung der eine Vielzahl von Prozess- und/oder Anlagedaten umfassenden Massedaten auf einer Anzeigevorrichtung in der in der Anlagentechnik, in Kraftwerken oder chemischen Anlagen geeignet.

Anzeigevorrichtungen zur Anzeige von Verfahrensparametern sowie von Zuständen der Anlagenkomponenten, zu denen auch die von den Messstellen innerhalb der technischen Anlage bereitgestellten Messwerte zählen, oder anderen relevanten Informationen sind allgemein bekannt. Derartige, landläufig als Standarddisplay bezeichnete Anzeigevorrichtungen zur Darstellung der zeigen jeweils den exakten gemessenen physikalischen Wert an, beispielsweise die die Prozessgrößen beschreibenden Messwerten für die Fließgeschwindigkeit, die Temperatur oder den Druck.

Alternativ gibt es auch Anzeigevorrichtungen mit sogenannten normierten Darstellungen bzw. Ansichten von Prozessgrößen, welche jeweils einen abstrakten Kennwert anzeigen. Dieser abstrakte Kennwert kann zum Beispiel einer vorgegebenen Qualitätsstufe entsprechen, welcher er zugeordnet wird.

Beispielsweise kann eine zweistufige Differenzierung der entsprechenden Prozessgröße nach "Normalzustand", beispielsweise als "0" dargestellt, und "Fehler", beispielsweise als 1 dargestellt, vorgesehen sein, gemäß welcher Einteilung die ermittelten Messwerte bzw. Prozess- und/oder Anlagengrößen zugewiesen werden.

Als Vorteil solcher normierter Anzeigen zur Darstellung der Prozess- und/oder Anlagengrößen erweist sich, dass hierdurch eine einfache, wenn auch grobe, Klassifizierung ermöglicht ist, zu deren Auswertung keine speziellen Fachkenntnisse vonnöten sind, um die jeweilige Situation anhand der gezeigten Darstellungsform zu beurteilen. Hierdurch erfährt der jeweilige Betreiber der betreffenden so ausgerüsteten Anlage eine wesentliche Unterstützung bei der Bedienung und Überwachung der Anlage bzw. des Prozesses.

Darüber hinaus ist es mit solchen normierten Anzeigen grundsätzlich möglich eine Vielzahl von verschiedenen Kennwerten zur Anzeige zu bringen. Allerdings ist ein vielfach ungelöstes Problem, nach welchen Kriterien die Normierung erfolgt. Häufig liegen keine oder nur wenige aussagefähige Referenzwerte vor, die eine zuverlässige Differenzierung und damit Klassifizierung beziehungsweise Kategorisierung der jeweiligen in der Anzeigevorrichtung zu betrachtenden Prozess- und/oder Anlagengrößen erlauben.

Aus der EP1355210 A1 ist ein Verfahren und System zur Datenvorverarbeitung von Prozessgrößen für die Darstellung von Prozesszuständen und Prozessabläufen eines technischen Prozesses, beispielsweise in einer Kraftwerksanlage oder in einer chemischen Anlage, bekannt geworden. Dabei werden Regelabweichungen aus den im Prozess vorhandenen Regelkreisen ermittelt und an eine Datenverarbeitungseinrichtung übermittelt. Für die jeweiligen Regelabweichungen wird mittels eines zugehörigen Verarbeitungsfunktionsblocks jeweils ein normierter Wert bestimmt, der an eine Einrichtung zur Datendarstellung übermittelt wird. Aus den normierten Werten wird schließlich eine Darstellung der Prozessgrößen und Prozessabläufe generiert und die Prozessgrößen und Prozessabläufe werden als graphische Symbole auf einer Prozessbedienstation angezeigt.

Schwierig gestaltet sich mit den vorab beschriebenen bekannten Verfahren eine systematische und effektive Kalibrierung der Darstellungen bzw. Ansichten von, insbesondere von zuvor normierten Regelgrößen.

Ausgehend von diesem Stand der Technik ist es Aufgabe der Erfindung, ein Verfahren und System der eingangs genannten Art derart weiterzubilden, dass die vorstehend genannten Nachteile vermieden werden und dass insbesondere normierte Messgrößen des technischen Prozesses oder der technischen Anlage in entsprechender Weise durch eine systematische und effektive Kalibrierung darstellbar sind und für deren Auswertung keine speziellen Fachkenntnisse benötigt werden, um die jeweilige Situation innerhalb der Anlage oder des Prozesses anhand der gezeigten Darstellungsform der normierten Prozess- und/oder Verfahrensgröße zu beurteilen.

Diese Aufgabe wird erfindungsgemäß durch die kennzeichnenden Merkmale der Ansprüche 1 und 8 gelöst.

Vorteilhafte Ausgestaltungen, Verbesserungen des erfindungsgemäßen Verfahrens zur Kalibrierung von normierten Anzeigen einer Vielzahl von Prozess- und/oder Anlagedaten sind in weiteren Ansprüchen und in der Beschreibung angegeben.

Demgemäß ist erfindungsgemäß vorgesehen, dass zur Kalibrierung einer normierten Darstellung, nachfolgend auch Anzeige genannt, von Prozess- und/oder Anlagengrößen - auch Prozess- und/oder Anlagedaten genannt -, insbesondere von Messwerten, Regelgrößen und Zustandsmeldungen, Parameter ermittelt werden, die aus vorhandenen Daten ausgewählt, aufbereitet und/oder abgeschätzt werden. Die zur Auswertung herangezogenen Daten beruhen dabei im Wesentlichen auf solchen Daten, die bei gleichen oder ähnlichen Anlagen oder Prozessen über einen festgelegten Zeitraum gewonnen worden und zur Archivierung als gesammelte Daten in festgelegten Zeitabständen, beispielsweise auf der Festplatte eines Protokoliservers, abgelegt sind. Zu diesen Daten zählen beispielsweise Messdaten als Messreihen, auch als Messwerthistorien oder als historische Prozessmesswerte bezeichnet. Die zur Durchführung der Verfahren benötigten historischen Prozessmesswerte werden vorzugsweise im Allgemeinen als Aufzeichnungen aus Prozessdatenbanken oder Prozessinformationsmanagement-Systemen zur Verfügung gestellt.

Insbesondere zeichnet sich die Erfindung dadurch aus, dass die Kalibrierung zur Normierung der Anzeige von stetigen Prozessen automatisch abläuft. Dementsprechend erfordert diese neue Vorgehensweise nur minimale Kenntnisse bei der Überwachung des Prozesses und bedeutet somit auch nur mäßigen Aufwand bei der technischen Bearbeitung.

Vorzugsweise werden gemäß einer vorteilhaften Ausführungsform der Erfindung die Parameter zur Kalibrierung auf die abgeschätzten Mittelwerte und die Varianz der aufbereiteten Daten gestützt.

Hierbei erweist es sich als zweckmäßig, dass für die Kalibrierung der Daten auch unerwünschte Ausreißer, auftretendes Rauschen oder Nullpunktabweichungen der innerhalb herangezogenen bzw. bereitgestellten Daten mittels geeigneter Filtermodule entfernt werden.

Die Präsenz verschiedener Betriebsarten bzw. Betriebszustände im Prozess, das heißt mehrerer stationärer Zustände, erfordert es eine Lemphase in den Ablauf einzubeziehen, in welcher Besonderheiten der jeweils angezeigten Prozess- und/oder Zustandsgrößen für jede Betriebsart der Anlage bzw. des Prozesses mittels statistischer Methoden ausgewertet werden und die daraus gewonnenen Ergebnisse dazu genutzt werden, die zuvor erwähnten Kalibrierungsparameter zu ermitteln.

In weiterer Verbesserung der Erfindung ist vorgesehen, dass Referenzanzeigen genutzt werden, um Zeitintervalle zu bestimmen, während welcher das Verfahren oder die Anlage als in einer vorgegebenen Betriebsart befindlich angesehen wird. Das erfindungsgemäße Verfahren berücksichtigt demgemäß eine Vordefinierung von Betriebszuständen.

Das erfindungsgemäße Verfahren ist auch zur Kalibrierung von Alarmgrenzen der Prozess- und/oder Anlagedaten geeignet. Zur Bestimmung einer oberen Alarmgrenze werden der Mittelwert und die Standardabweichung der jeweiligen Prozess- und/oder Anlagengröße verwendet, die zu dem Betriebszustand mit dem größten Mittelwert gehören. Die obere Alarmgrenze OG wird dann nach folgender Formel ermittelt:

$$OG = Mittelwert + (Konfidenzfaktor) \cdot Standardabweichung)$$

Der Konfidenzfaktor ist dabei je nachdem, wie eng man die Alarmgrenzen setzen möchte vom Anwender vorgebbar.

Zur Bestimmung einer unteren Alarmgrenze wird entsprechend der Betriebszustand mit dem kleinsten Mittelwert verwendet.

Durch das vorab beschriebene Verfahren, welches die jeweiligen Betriebszustände der Anlage oder des Prozesses berücksichtigt, wird verhindert, dass auch solche Zeitintervalle berücksichtigt werden, die keine Relevanz haben, wie beispielsweise bei abgeschalteter Anlage.

In einer Ausgestaltung des erfindungsgemäßen Verfahrens soll nunmehr kein stationäres Verhalten vorliegen. Ist also der Prozess instationär, beispielsweise beim An- oder Abfahren eines Kraftwerks, wird dies den Anlagenfahrern deutlich angezeigt, da das Normierungsverfahren für solche Betriebszustände nicht ausgelegt ist. Die Verwendung der Kalibrierungsparameter des letzten stationären Betriebszustands führt möglicherweise zu für die Anlagenfahrer weiterhin hilfreichen Anzeigen, wenn berücksichtigt wird, dass in transienten bzw. instationären Betriebszuständen auch größere Ausschläge der Prozess- und/oder Anlagengrößen zu erwarten sind.

Beim vorab beschriebenen Verfahren wird davon ausgegangen, dass eine begrenzte Anzahl von Betriebszuständen vom Anwender vordefiniert wird. Bei einem Kraftwerk könnten dies beispielsweise die Betriebszustände Schwachlast (< 300 MW), Mittellast (300 MW - 600 MW) und Volllast (> 600 MW) sein.

In einigen Fällen ist dies aber nicht oder nur schwer möglich, beispielsweise zwingen volatile Energiequellen Kraftwerksbetreiber zunehmend dazu, ständig in ganz verschiedenen Betriebspunkten zu fahren.

Das nunmehr modifizierte Verfahren verzichtet auf eine Vordefinierung von Betriebszuständen. Nach dem ein stationärer Betriebspunkt erkannt wurde, werden die zugehörigen statistischen Kennwerte abgespeichert. Nachdem eine ausreichende Anzahl von Daten zu den jeweiligen Betriebspunkten vorliegt, wird eine aus dem Stand der Technik bekannte lineare Regression durchgeführt. Diejenigen Prozesswerte, bei denen die lineare Regression nur zu unbrauchbaren Ergebnissen führt, müssen ausgeschlossen werden, für die anderen Prozesswerte werden der Mittelwert MW und die Varianz V gemäß den folgenden beiden Formeln ermittelt:

$$MW = f1(X(ref)MW)$$

$$V = f2(X(ref)V)$$

Im linearen Fall ergeben sich der Mittelwert MW und die Varianz V aus den folgenden beiden Formeln:

$$MW = alpha1 + beta1 \cdot X(ref)MW$$

$$V = alpha2 + beta2 \cdot X(ref)V$$

Die Parameter alpha1 und beta1 werden so ermittelt, dass sich für gemessene historische Werte ein minimaler Fehler ergibt. Auf der Basis des vermuteten linearen Zusammenhangs kann dann für einen zukünftigen Referenzwert X(ref)MW der zugehörige Wert MW ermittelt werden.

Für eine Online-Normierung von Prozessgrößen muss nun lediglich ein stationärer Zustand festgestellt werden. Nachdem Mittelwert und Varianz für den Referenzwert ermittelt wurden, können über die vorab aufgezeigten Formeln Nominalwerte, also Werte, die im Normalbetrieb erwartet werden, für den Mittelwert und die Varianz für beliebige Prozesswerte abgeschätzt werden.

Die so ermittelten Nominalwerte dienen als Kalibrierungsparameter für die Online-Normierung.

Mit dem vorab beschriebenen Verfahren wird in vorteilhafter Weise der Konfigurationsaufwand verringert und gleichzeitig die Genauigkeit der normierten Anzeigen von Prozess- und/oder Anlagendaten erhöht.

Wie eingangs bereits angesprochen, betrifft die Erfindung auch eine Anzeigevorrichtung, nachfolgend auch Display genannt, vorzugsweise einem Bildschirm, beziehungsweise ein Anzeigesystem zur Kalibrierung von normierten Anzeigen von Daten, insbesondere von Massedaten, welche bei technischen Verfahren beziehungsweise beim Betrieb technischer Anlagen anfallen. Die Erfindung ist, insbesondere zur grafischen Darstellung von Massedaten auf einer Anzeigevorrichtung, vorzugsweise einem Bildschirm, in der in der Anlagentechnik, der Verfahrenstechnik oder der Automatisierungstechnik vorgesehen.

Erfindungsgemäß benutzt diese Vorrichtung beziehungsweise dieses System zur Kalibrierung Parameter, welche auf Grundlage von vorhandenen Daten erzeugt sind, die zuvor aufbereitet wurden.

Dabei erweist es sich als vorteilhaft, dass die Parameter zur Kalibrierung sich auf die abgeschätzten Mittelwerte sowie auf die Varianz der aufbereiteten Daten stützen.

Gemäß einer vorteilhaften Ausgestaltung der Erfindung ist das System dadurch gekennzeichnet, dass beim Aufbereiten der gesammelten Daten Filtermodule zum Entfernen unerwünschter Ausreißer von Daten vorgesehen sind.

Entsprechend dem Verfahren ist auch beim System im Falle mehrerer Betriebsarten des Prozesses oder der Anlage eine Lemphase vorgesehen, die zur statistischen Auswertung von Besonderheiten jeder angezeigten Prozess- und/oder Anlagengröße für jede Betriebsart des Prozesses oder der Anlage genutzt wird. Hierbei dient zweckmäßigerweise die statistische Auswertung zur Ermittlung der Kalibrierungsparameter.

Ferner ist gemäß einer besonders vorteilhaften Ausgestaltung des erfindungsgemäßen Systems vorgesehen, Referenzanzeigen dazu zu nutzen, um Zeitintervalle zu bestimmen, während welcher das Verfahren sich in einer vorgegebenen Betriebsart befindet.

Diese und weitere vorteilhafte Ausgestaltungen und Verbesserungen der Erfindung sind Gegenstand der Unteransprüche.

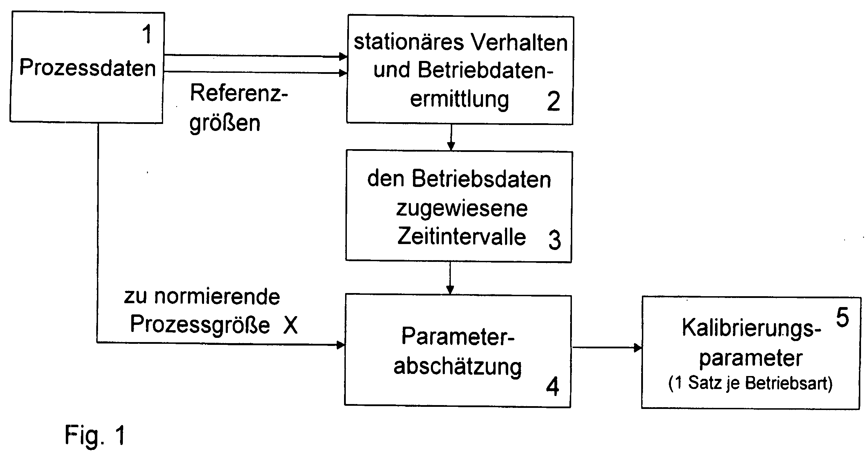

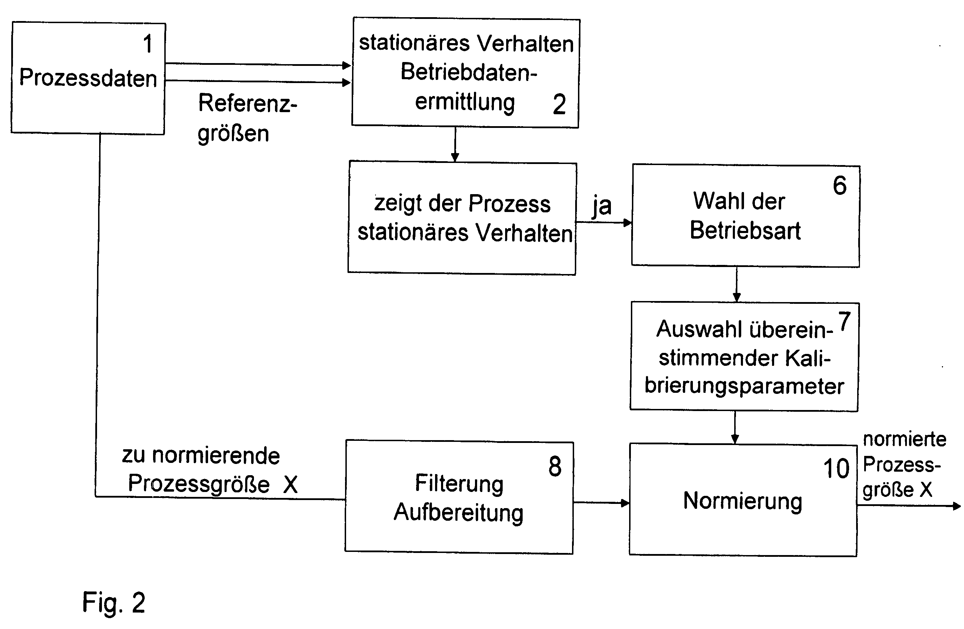

Anhand der in den Figuren 1 und 2 dargestellten Ausführungsschemata sollen die Erfindung, vorteilhafte Ausgestaltungen und Verbesserungen der Erfindung sowie besondere Vorteile der Erfindung näher erläutert und beschrieben werden.

Es zeigen:

Fig. 1 ein beispielhaftes Ablaufdiagramm für eine Offline- Erzeugung von KalibrierungsParametern, und
Fig. 2 ein beispielhaftes Ablaufdiagramm für eine Online-Normierung von Prozessgrößen.

Fig. 1 zeigt in einem Ablaufdiagramm schematisch die Offline- Erzeugung von Kalibrierungs-Parametem, welche für die erfindungsgemäße Normierung der Anzeigen der betreffenden Prozesskennwerte vorgesehen sind.

Hierbei werden in einem ersten Schritt mittels einer Erfassungseinheit 1 die relevanten Prozessdaten erfasst. In einem zweiten Schritt werden mittels Referenzgrößen von einer ersten Verarbeitungseinheit 2 sowohl die Betriebsart bzw. der Betriebszustand der Anlage ermittelt als auch geprüft, ob ein stationäres Verhalten des Prozesses vorliegt. Bei einem Kraftwerk bietet sich beispielsweise die erzeugte Leistung als Referenzgröße an, die bestimmt, ob das Kraftwerk in Schwachlast (< 300 MW), Mittellast (300 MW - 600 MW) oder Volllastbetrieb (> 600 MW) arbeitet.

In einem an den zweiten Schritt anschließenden dritten Schritt werden mittels einer weiteren Verarbeitungseinheit 3 den Betriebsarten entsprechende Zeitintervalle zugewiesen.

In einem vierten Schritt werden einerseits die aus den von der Erfassungseinheit 1 bereitgestellten Prozessdaten zu normierenden Prozessgröße "X" sowie andererseits die von der weiteren Verarbeitungseinheit 3 den Betriebsarten zugewiesene Zeitintervalls einer Parametriereinheit 4 zugeführt. Mittels der Parametriereinheit 4 wird eine Parameterabschätzung durchgeführt, beispielsweise werden Mittelwerte und Varianzen bestimmt. Der mittels der durchgeführten Parameterabschätzung ermittelte Kalibrierungsparameter wird einer Ausgabeeinheit 5 zur weiteren Verwendung in einer Online-Normierung übertragen. Die Kalibrierungsparameter umfassen dabei einen Satz je Betriebsart, beispielsweise hat die Messgröße Differenzdruck in der Betriebsart Schwachlastbetrieb einen Mittelwert von 30 bar und eine Standardabweichung von 1 bar) und in der Betriebsart Volllastbetrieb einen Mittelwert 35 bar und eine Standardabweichung von 2 bar.

In **Fig.** 2 ist ein Ablaufdiagram für die Online-Normierung von Prozessgrößen dargestellt, anhand dessen ersichtlich ist, wie aus den vorhandenen Prozessdaten schließlich normierte Prozessgrößen "X" ermittelt werden.

Auch hier werden wie in **Fig.** 1 in einem ersten Schritt mittels der Erfassungseinheit 1 Prozessdaten erfasst sowie in einem zweiten Schritt mittels Referenzgrößen von der ersten Verarbeitungseinheit 2 sowohl die Betriebsart ermittelt als auch in einem dritten Schritt geprüft, ob ein stationäres Verhalten des Prozesses vorliegt.

Wenn ein stationäres Verhalten des Prozesses vorliegt, erfolgt in einem vierten Schritt mittels eines Auswahlmoduls 6 die Wahl der Betriebsart. Hieran schließt sich in einem fünften Schritt mittels eines weiteren Auswahlmoduls 7 die Auswahl der zugehörigen übereinstimmenden Kalibrierungsparameter an, die gemäß dem in Fig. 1 beschriebenen Verfahrens ermittelt wurden. Wenn beispielsweise festgestellt wird dass sich das Kraftwerk im stationären Volllastbetrieb befindet, müssen die Kalibrierungsparameter verwendet werden, die zuvor für den Volllastbetrieb ermittelt wurden.

Wie auch in **Fig.** 1 für die Parameterabschätzung gezeigt, wird auch bei der Online-Normierung der Prozessgröße in einem zweiten Zweig die zu normierenden Prozessgröße "X" in einem sechsten Schritt einer als Filtermodul 8 arbeitenden Einheit bereitgestellt, welche unerwünschte Ausreißer mittels geeigneter Filterfunktionen entfernt für die in einem letzten Schritt vorgesehene Normierung aufbereitet, bevor sie gemeinsam mit dem ausgewählten übereinstimmenden Kalibrierungsparameter aus dem fünften Schritt im letzen Schritt mittels einer Normierungseinheit 10 der Normierung unterzogen werden, welche als Resultat eine normierte Prozessgröße "X" einer weiteren Ausgabeeinheit 10 bereitgestellt.

**Patentansprüche**

1. Verfahren zur Ermittlung von Kalibrierungsparametern zur Normierung der grafischen Darstellung einer Vielzahl von Prozessgrößen einer technischen Anlage auf einer Anzeigevorrichtung, wobei die normierte Darstellung jeweils einen abstrakten Kennwert zur Klassifizierung der Prozessgrößen anzeigt, **dadurch gekennzeichnet, dass**

   • in einem ersten Schritt mittels einer Erfassungseinheit (1) Prozessdaten in Form historischer Prozessmesswerte erfasst werden,
   • in einem zweiten Schritt von einer ersten Verarbeitungseinheit (2) mittels Referenzgrößen sowohl der Betriebszustand der Anlage ermittelt als auch geprüft wird, ob ein stationäres Verhalten des Prozesses vorliegt,
   • in einem dritten Schritt mittels einer weiteren Verarbeitungseinheit (3) dem Betriebszustand ein entsprechendes Zeitintervall zugewiesen wird, während dessen die Anlage als in dem vorgegebenen Betriebszustand befindlich angesehen wird,
   • in einem vierten Schritt eine von der Erfassungseinheit (1) bereitgestellte zu normierende Prozessgröße (X) sowie das von der weiteren Verarbeitungseinheit (3) dem Betriebszustand zugewiesene Zeitintervall einer Parametriereinheit (4) zugeführt werden,
   • mittels der Parametriereinheit (4) eine Parameterabschätzung zur Bestimmung der Kalibrierungsparameter durchgeführt wird, wobei als Kalibrierungsparameter Werte für den Mittelwert und die Varianz der Prozessgröße abgeschätzt werden, die im Normalbetrieb erwartet werden, und
   • die Kalibrierungsparameter einer Ausgabeeinheit (5) zur weiteren Verwendung in einer Online-Normierung übertragen werden.

2. Verfahren nach Anspruch 1, **dadurch gekennzeichnet, dass** die bereitgestellten Prozessdaten auf solchen Daten beruhen, die bei gleichen oder ähnlichen Anlagen oder Prozessen über einen festgelegten Zeitraum gewonnen worden und zur Archivierung als gesammelte Daten in festgelegten Zeitabständen abgelegt worden sind.

3. Verfahren nach einem der vorherigen Ansprüche, **dadurch gekennzeichnet, dass** auftretendes Rauschen oder Nullpunktabweichungen innerhalb der bereitgestellten Prozessdaten mittels geeigneter Filtermodule eliminiert werden.

4. Verfahren nach einem der vorherigen Ansprüche, **dadurch gekennzeichnet, dass** die Kalibrierungsparameter einen Satz je Betriebszustand umfassen, wobei ein Satz einen Mittelwert und eine Standardabweichung enthält.

**5.** Verfahren nach einem der vorherigen Ansprüche, **dadurch gekennzeichnet, dass** der abstrakte Kennwert einer vorgegebenen Qualitätsstufe entspricht, welcher er zugeordnet wird.

**6.** Verfahren nach Anspruch 5, **dadurch gekennzeichnet, dass** eine zweistufige Differenzierung der entsprechenden Prozessgröße nach "Normalzustand" und "Fehler" vorgesehen ist.

**7.** Verfahren nach Anspruch 1, **dadurch gekennzeichnet, dass** zur Online-Normierung der Prozessgrößen

• in einem ersten Schritt mittels einer Erfassungseinheit (1) Prozessdaten in Form historischer Prozessmesswerte erfasst werden,
• in einem zweiten Schritt von einer ersten Verarbeitungseinheit (2) mittels Referenzgrößen Betriebsdaten ermittelt werden,
• in einem dritten Schritt von der ersten Verarbeitungseinheit (2) geprüft wird, ob ein stationäres Verhalten des Prozesses vorliegt,
• wenn ein stationäres Verhalten des Prozesses vorliegt, in einem vierten Schritt mittels eines Auswahlmoduls (6) die Betriebsart gewählt wird,
• in einem fünften Schritt mittels eines weiteren Auswahlmoduls (7) eine Auswahl zugehöriger übereinstimmender Kalibrierungsparameter erfolgt, wobei die Kalibrierungsparameter gemäß dem Verfahren nach Anspruch 1 ermittelt wurden,in einem sechsten Schritt die zu normierende Prozessgröße (X) einer als Filtermodul (8) arbeitenden Einheit bereitgestellt wird, welche die zu normierende Prozessgröße für die Normierung aufbereitet, und
• diese in einem letzten Schritt, gemeinsam mit den ausgewählten übereinstimmenden Kalibrierungsparametern aus dem fünften Schritt, mittels einer Normierungseinheit (10) der Normierung unterzogen wird und das Resultat der normierten Prozessgröße einer weiteren Ausgabeeinheit (10) bereitgestellt wird.

**Claims**

**1.** Method for determining calibration parameters for standardizing the graphical display of a multiplicity of process variables of a technical installation on a display apparatus, the standardized display respectively displaying an abstract characteristic value for classifying the process variables, <u>**characterized**</u> **in that**

• in a first step, process data in the form of historical process measured values are acquired using an acquisition unit (1),
• in a second step, a first processing unit (2) both determines the operating state of the installation and checks whether there is a stationary behaviour of the process by means of reference variables,
• in a third step, a further processing unit (3) is used to allocate a corresponding time interval to the operating state, during which the installation is considered to be in the predefined operating state,
• in a fourth step, a process variable (X) which is to be standardized and is provided by the acquisition unit (1) and the time interval allocated to the operating state by the further processing unit (3) are supplied to a parameterization unit (4),
• the parameterization unit (4) is used to estimate parameters for determining the calibration parameters, values for the mean value and the variance of the process variable which are expected during normal operation being estimated as calibration parameters, and
• the calibration parameters are transmitted to an output unit (5) for further use in online standardization.

**2.** Method according to Claim 1, **characterized in that** the process data provided are based on those data which have been obtained in the same or similar installations or processes over a defined period and have been stored as collected data for archiving at defined intervals of time.

**3.** Method according to one of the preceding claims, **characterized in that** noise which occurs or zero drifts inside the process data provided is/are eliminated using suitable filter modules.

**4.** Method according to one of the preceding claims, **characterized in that** the calibration parameters comprise one set for each operating state, one set containing a mean value and a standard deviation.

**5.** Method according to one of the preceding claims, **characterized in that** the abstract characteristic value corresponds to a predefined quality level, to which it is assigned.

**6.** Method according to Claim 5, **characterized in that** two-stage differentiation of the corresponding process variable according to "normal state" and "error" is provided.

**7.** Method according to Claim 1, **characterized in that**, for the online standardization of the process variables,

- in a first step, process data in the form of historical process measured values are acquired using an acquisition unit (1),
- in a second step, a first processing unit (2) determines operating data by means of reference variables,
- in a third step, the first processing unit (2) checks whether there is a stationary behaviour of the process,
- if there is a stationary behaviour of the process, the operating mode is selected in a fourth step using a selection module (6),
- in a fifth step, a further selection module (7) is used to select associated matching calibration parameters, the calibration parameters having been determined in accordance with the method according to Claim 1, in a sixth step, the process variable (X) to be standardized is made available to a unit which operates as a filter module (8) and preprocesses the process variable to be standardized for standardization, and
- this process variable is subjected, together with the selected matching calibration parameters from the fifth step, to the standardization using a standardization unit (10) in a last step and the result of the standardized process variable is made available to a further output unit (10).

**Revendications**

**1.** Procédé pour déterminer des paramètres d'étalonnage pour la normalisation de la représentation graphique d'une pluralité de grandeurs de processus d'une installation technique sur un dispositif d'affichage, dans lequel la représentation normalisée affiche respectivement une valeur caractéristique abstraite permettant de classer les grandeurs de processus, **caractérisé en ce que**

- lors d'une première étape, des données de processus sont détectées sous la forme de valeurs de mesure de processus historiques au moyen d'une unité de détection (1),
- lors d'une deuxième étape, une première unité de traitement (2) détermine l'état de fonctionnement de l'installation et vérifie également si un comportement stationnaire du processus est présent au moyen de grandeurs de référence,
- lors d'une troisième étape, un intervalle de temps correspondant pendant lequel l'installation est considérée comme se trouvant dans l'état de fonctionnement prédéterminé est alloué à l'état de fonctionnement au moyen d'une autre unité de traitement (3),
- lors d'une quatrième étape, une grandeur de processus (X) à normaliser fournie par l'unité de détection (1) ainsi que l'intervalle de temps alloué à l'état de fonctionnement par l'autre unité de traitement (3) sont délivrés à une unité de paramétrage (4),
- une estimation des paramètres destinée à déterminer les paramètres d'étalonnage est effectuée au moyen de l'unité de paramétrage (4), dans lequel des valeurs destinées à la valeur moyenne et à la variance des grandeurs de processus, qui sont attendues lors d'un fonctionnement normal, sont estimées en tant que paramètres d'étalonnage, et
- les paramètres d'étalonnage d'une unité de sortie (5) sont transmis pour une utilisation ultérieure lors d'une normalisation en ligne.

**2.** Procédé selon la revendication 1, **caractérisé en ce que** les données de processus fournies reposent sur des données qui ont été obtenues dans des installations ou des processus identiques ou semblables au cours d'une période établie et ont été stockées à des fins d'archivage en tant que données collectées à des intervalles établis.

**3.** Procédé selon l'une quelconque des revendications précédentes, **caractérisé en ce qu'**un bruit ou des écarts à zéro apparaissant au sein des données de processus fournies sont éliminés au moyen de modules de filtrage appropriés.

**4.** Procédé selon l'une quelconque des revendications précédentes, **caractérisé en ce que** les paramètres d'étalonnage comprennent un enregistrement pour chaque état de fonctionnement, dans lequel un enregistrement contient une valeur moyenne et un écart type.

5. Procédé selon l'une quelconque des revendications précédentes, **caractérisé en ce que** la valeur caractéristique abstraite correspond à un niveau de qualité prédéterminé auquel elle est associée.

6. Procédé selon la revendication 5, **caractérisé en ce qu'**une différentiation à deux niveaux des grandeurs de processus correspondantes est prévue pour un "état normal" et un "défaut".

7. Procédé selon la revendication 1, **caractérisé en ce que**, pour la normalisation en ligne des grandeurs de processus,

- lors d'une première étape, des données de processus sont détectées sous forme de valeurs de mesure de processus historiques au moyen d'une unité de détection (1),
- lors d'une deuxième étape, des données de fonctionnement sont déterminées par une première unité de traitement (2) au moyen de grandeurs de référence,
- lors d'une troisième étape, il est vérifié par la première unité de traitement (2) si un comportement stationnaire du processus est présent,
- si un comportement stationnaire du processus est présent, le mode de fonctionnement est sélectionné lors d'une quatrième étape au moyen d'un module de sélection (6),
- lors d'une cinquième étape, une sélection de paramètres d'étalonnage concordants associés est effectuée au moyen d'un autre module de sélection (7), dans lequel les paramètres d'étalonnage ont été déterminés conformément au procédé selon la revendication 1,
- lors d'une sixième étape, les grandeurs de processus (X) à normaliser sont fournies à une unité fonctionnant en tant que module de filtrage (8), qui prépare les grandeurs de processus à normaliser en vue de leur normalisation, et
- ces dernières, lors d'une dernière étape, en association avec les paramètres d'étalonnage concordants et sélectionnés provenant de la cinquième étape, au moyen d'une unité de normalisation (10), sont soumises à la normalisation et les grandeurs de processus normalisées qui en résultent sont fournies à une autre unité de sortie (10).

Fig. 1

```
┌─────────────────┐                    ┌──────────────────────┐
│              1  │   ───────────────► │ stationäres Verhalten│
│  Prozessdaten   │                    │ Betriebdaten-        │
│                 │   ───────────────► │ ermittlung        2  │
└─────────────────┘   Referenz-        └──────────────────────┘
        │             größen                     │
        │                                         ▼
        │                             ┌──────────────────────┐      ┌──────────────────────┐
        │                             │                      │  ja  │              6       │
        │                             │ zeigt der Prozess    │ ───► │ Wahl der             │
        │                             │ stationäres Verhalten│      │ Betriebsart          │
        │                             └──────────────────────┘      └──────────────────────┘
        │                                                                      │
        │                                                                      ▼
        │                                                           ┌──────────────────────┐
        │                                                           │ Auswahl überein-  7  │
        │                                                           │ stimmender Kali-     │
        │                                                           │ brierungsparameter   │
        │                                                           └──────────────────────┘
        │                                                                      │
        │      zu normierende         ┌──────────────────────┐                 ▼            normierte
        └───── Prozessgröße  X   ───► │ Filterung         8  │      ┌──────────────────────┐ Prozess-
                                      │ Aufbereitung         │ ───► │              10      │ größe X
                                      │                      │      │ Normierung           │ ────►
                                      └──────────────────────┘      └──────────────────────┘
```

Fig. 2

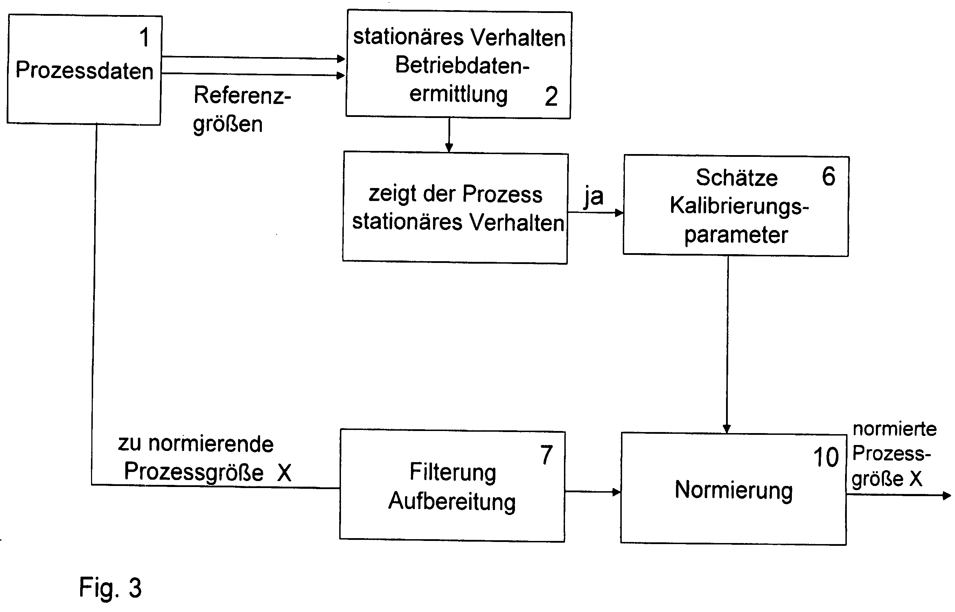

Fig. 3

EP 2 402 832 B1

**IN DER BESCHREIBUNG AUFGEFÜHRTE DOKUMENTE**

**In der Beschreibung aufgeführte Patentdokumente**

- EP 1355210 A1